(19) Europäisches Patentamt
European Patent Office
Office européen des brevets

(11) Numéro de publication : **0 485 256 A1**

# (12) DEMANDE DE BREVET EUROPEEN

(21) Numéro de dépôt : **91402878.2**

(51) Int. Cl.$^5$ : **C01F 17/00**

(22) Date de dépôt : **28.10.91**

(30) Priorité : **07.11.90 FR 9013787**

(43) Date de publication de la demande : **13.05.92 Bulletin 92/20**

(84) Etats contractants désignés : **AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Delloye, Thierry**
**6 passage de Blois**
**F-17180 Perigny (FR)**
Inventeur : **Leveque, Alain**
**18 rue du Général Guillaumat**
**F-17000 La Rochelle (FR)**
Inventeur : **Rollat, Alain**
**19 rue de Suéde**
**F-17000 La Rochelle (FR)**
Inventeur : **Sabot, Jean-Louis**
**3 avenue Pascal**
**F-78600 Maison Lafitte (FR)**

(74) Mandataire : **Dutruc-Rosset, Marie-Claude et al**
**RHONE-POULENC CHIMIE Direction des Brevets 25, Quai Paul Doumer**
**F-92408 Courbevoie Cédex (FR)**

## (54) Procédé de séparation de terres rares.

(57) L'invention concerne un procédé de séparation de terres rares, et plus particuliérement un procédé de séparation des terres rares légéres y compris l'yttrium, des autres terres rares.

Ce procédé consiste à mettre en contact une solution aqueuse contenant les terres rares à séparer avec une solution organique comprenant un agent extractant pour faire passer les ions des terres rares lourdes ou autres terres rares depuis la phase aqueuse dans la phase organique puis à récupérer les terres rares lourdes par réextraction avec une solution aqueuse acide. L'agent extractant est un mélange d'au moins un acide carboxylique insoluble dans l'eau comprenant plus de 6 atomes de carbone avec au moins un composé neutre insoluble dans l'eau choisi dans le groupe des agents organophosphorés neutres ou des alcools ayant un nombre de carbone supérieur à 6.

EP 0 485 256 A1

La présente invention concerne un procédé de séparation des terres rares.

Elle se rapporte plus particulièrement à un procédé de séparation des terres rares légères y compris l'yttrium, des terres rares lourdes.

Par le terme terres rares on entend les éléments portant un numéro atomique compris entre 57 et 71 et l'yttrium portant le numéro 39.

Par le terme "Terres rares légères" on entend les terres rares portant un numéro atomique compris entre 57 et 62, tandis que par le terme "Terres rares lourdes" on entend les éléments ayant un numéro atomique compris entre 63 et 71.

On connaît déjà des procédés de séparation par extraction liquide/ liquide des terres rares lourdes et de l'yttrium, ainsi le brevet américain N°4201747 décrit un procédé consistant à ajouter un complexant (l'acide hydroxyethyl ethylènediaminetriacétique ou HEDTA) dans la solution aqueuse contenant les ions de terres rares à séparer, puis à mettre en contact cette solution avec une solution organique contenant un agent extractant constitué par un mélange de tributyl phosphate avec un ester d'acide phosphorique, ainsi l'yttrium est extrait de la solution aqueuse dans la solution organique avec un coefficient de partage plus élevé que pour les terres rares lourdes.

Egalement dans le brevet américain n°3640678 un procédé de séparation de l'yttrium des terres rares lourdes est décrit. Ce procédé consiste après séparation des terres rares légères à mettre en contact la solution aqueuse contenant l'yttrium et les terres rares lourdes avec un solvant organique contenant un agent d'extraction, un acide carboxylique de la famille des acides halogénodi ou trialkyl carboxyliques. Ainsi les terres rares lourdes sont extraites dans la phase organique tandis que l'yttrium est récupéré dans la phase aqueuse épurée. Les terres rares lourdes sont réextraites par mise en contact de la phase organique chargée avec une solution acide.

Toutefois la vitesse de réextraction des terres rares lourdes par la solution acide est lente. Cette cinétique lente requiert l'utilisation de nombreux étages d'extraction liquide/liquide à contre-courant et une consommation plus importante d'acide fort utilisé dans la réextraction et donc pénalise le procédé d'un point de vue économique.

Un des buts de la présente invention est de remédier à ces inconvénients en proposant un procédé de séparation des terres rares légères y compris l'yttrium présentant une cinétique élevée de la réextraction des terres rares lourdes par une solution acide.

A cet effet l'invention propose un procédé de séparation d'ions de terres rares légères y compris l'yttrium de ceux de terres rares lourdes contenus dans une solution aqueuse, caractérisé en ce qu'il consiste à :

– mettre en contact ladite solution aqueuse avec un matériau comprenant un agent extractant organique pour faire passer les ions de terres rares lourdes depuis la phase aqueuse vers ledit matériau, ledit agent extractant étant un mélange d'au moins un acide carboxylique insoluble dans l'eau comprenant plus de 6 atomes de carbone ou son sel et d'au moins un composé neutre insoluble dans l'eau choisi dans le groupe des agents organophosphorés neutres ou des alcools ayant un nombre de carbone supérieur à 6,

– à réextraire les ions de terres rares lourdes par mise en contact dudit matériau comprenant l'agent extractant avec une solution aqueuse acide, et

– recueillir d'une part une solution aqueuse contenant les ions de terres rares légères y compris l'yttrium et d'autre part une solution aqueuse contenant les ions de terres rares lourdes.

L'utilisation d'un composé neutre avec l'acide carboxylique permet, sans affecter de manière sensible la sélectivité entre les différentes terres rares, d'améliorer de manière importante la cinétique de réextraction des terres rares lourdes par une solution acide.

Ainsi, d'une part le dimensionnement des dispositifs (mélangeurs-décanteurs par exemple) pour réaliser la mise en contact de l'extractant organique chargé et de la solution acide de réextraction peut être diminué de manière sensible, et d'autre part, la quantité d'acide nécessaire pour cette réextraction est également réduite. Ces deux points permettent d'une part une amélioration du rendement global de séparation en évitant, une pollution des terres rares légères non extraites par les terres rares lourdes contenues dans l'agent extractant recyclé et d'autre part une amélioration sensible de l'économie du procédé.

Par matériau comprenant un agent extractant, il faut comprendre tout système ou produit permettant de mettre en contact l'agent extractant avec la phase aqueuse et de pouvoir recueillir ou séparer cet agent extractant après contact avec la phase aqueuse.

Ainsi, dans le mode de réalisation préféré de l'invention et qui sera exemplifié ci-dessous, le matériau est une solution ou solvant organique contenant l'agent extractant, formant une phase liquide organique.

Toutefois, l'invention s'applique également à d'autres modes de mise en oeuvre, comme par exemple l'utilisation de support poreux dans lequel est incorporé l'agent extractant. L'échange avec le milieu aqueux est dans ce cas réalisé comme dans les procédés utilisant des colonnes d'adsorbant ou de résines.

A titre d'exemple, on peut citer comme support poreux le charbon actif, les résines adsorbantes comme

les résines commercialisées par la société Bayer sous le nom commercial "Lewatit OC 1062" ou par Rohm et Haas sous les noms commerciaux "Amberlite XAD 7 ou XAD 1180", les résines échangeuses d'ions à squelette polydivinylbenzène.

Selon l'invention, les acides carboxyliques insolubles dans l'eau convenables sont, par exemple, les acides comprenant de 6 à 20 atomes de carbone.

Parmi ces acides, on peut citer comme composés préférés de l'invention, les acides di ou trialkyl carboxyliques. Ainsi à titre d'exemple, l'acide carboxylique peut-être l'acide méthyl-2 butylpentanoïque, l'acide méthyl-2 butyl-2 butanoïque, l'acide méthyl-2 butyl-2 hexanoïque, l'acide "VERSATIC 10" commercialisé par la société SHELL.

On peut encore citer comme composés préférés, les acides carboxyliques halogénés et notamment ceux dont l'halogène est le brome ou le chlore.

Ainsi, à titre d'exemple, l'acide carboxylique peut être l'acide bromo-2 éthyl-2 hexanoïque, l'acide chloro-2 éthyl-2 hexanoïque et le bromo-2 butyl-2 heptanoïque.

Les acides naphténiques ou benzoïques sont également convenables pour l'invention.

Selon une autre caractéristique de l'invention, les composés neutres insolubles dans l'eau sont choisis parmi les composés organophosphorés, les alcools ayant un nombre de carbone supérieur à 5, de préférence compris entre 5 et 20 et appelés communément "alcool lourd" ainsi que les alkylphénols ayant un nombre de carbone compris de préférence entre 8 et 20, les cétones, esters comprenant de 5 à 20 atomes de carbone.

Les composés organophosphorés neutres convenables pour l'invention ont comme formules générales :

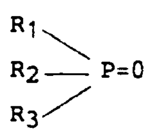 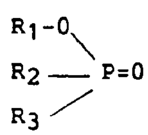 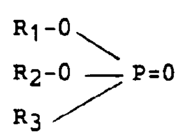 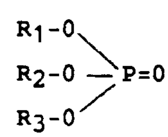

dans lesquelles:

$R_1$ , $R_2$ , $R_3$ identiques ou différents représentent un radical hydrocarboné substitué éventuellement, linéaire ou ramifié, saturé ou insaturé, cyclique saturé ou insaturé. Ce radical peut également comprendre des hétéroatomes.

Avantageusement, la somme des nombres d'atomes de carbone des radicaux $R_1$ , $R_2$ , $R_3$ est au moins égale à 12.

De préférence, l'un des radicaux $R_1$ , $R_2$ , $R_3$ comprend de 4 à 15 atomes de carbone.

Parmi ces composés organophosphorés neutres, on peut citer, à titre d'exemple le composé organophosphoré choisi dans le groupe comprenant le tri-n-butylphosphate, le tri-isobutylphosphate, le dibutyl-butylphosphonate, le di éthylhexyl-2 éthylhexyl-2 phosphonate, l'oxyde de tri-octylphosphine, les oxydes de phosphine commercialisés sous les marques Cyanex 921, 923 ou 925.

Comme composés organiques neutres convenables pour l'invention, on peut également citer les alcools dits lourds comprenant au moins 5 atomes de carbone, de préférence de 5 à 20 atomes de carbones. Parmi ceux-ci, on peut citer, à titre d'exemple le n- octanol, l'héthyl-2 hexanol, le décanol, l'isodécanol.

D'autres composés peuvent être utilisés avantageusement comme les alkylphénols comprenant de préférence entre 8 et 20 atomes de carbone, comme le nonylphénol. Enfin, on peut encore citer parmi les composés avantageux des cétones et esters comme la dibutylcétone, l'éthylheptylcétone, l'éthyl-2 hexanoate de butyle.

Dans un mode de réalisation préféré de l'invention, les agents extractants sont dissous dans un diluant pour former une solution ou solvant organique.

A titre d'exemple, on peut citer comme diluants convenables ceux habituellement mis en oeuvre pour réaliser des opérations d'extraction liquide-liquide, comme les composés aliphatiques, comme par exemple, l'hexane, l'heptane, le dodécane, et les coupes pétrolières du type kérosène ; les composés aromatiques comme, par exemple, le benzène, le toluène, l'éthylbenzène, le xylène et les coupes du type Solvesso (marque déposée par la Société Exxon) et enfin les dérivés halogénés comme, par exemple, le chloroforme, et le tétrachlorure de carbone.

Les concentrations en agents extractants varient dans de larges limites.

Les concentrations peuvent varier de 5 % en volume lorsque l'agent d'extraction est en solution dans un diluant jusqu'à environ 100 % lorsque l'agent est utilisé pur.

Dans un mode de réalisation préféré, la concentration en composé neutre dans le solvant organique est comprise entre 0,1 mole/l et 3 mole/l.

De même, la concentration en acide carboxylique dans le solvant organique est comprise entre 0,1 mole/l et 3 mole/l.

La concentration des éléments terres rares dans la phase aqueuse peut varier dans de larges limites.

Egalement, la nature des anions contenus dans cette phase aqueuse est indifférente. De préférence, ces anions sont des anions nitrates ou chlorures.

Selon une autre caractéristique de l'invention, les terres rares lourdes extraites par la phase organique sont récupérées par mise en contact de cette phase avec une solution aqueuse acide.

La concentration en acide de cette solution est avantageusement comprise entre $10^{-2}$ N et 10 N.

La nature de l'acide est indifférente, toutefois, les acides nitrique, chlorhydrique sont préférés.

Les solutions aqueuses recueillies dont une est appauvrie en terres rares lourdes, l'autre concentrée en terres rares lourdes peuvent subir différents traitements comme par exemple une purification, dilution ou concentration.

Elles peuvent également être traitées pour séparer et/ou récupérer les terres rares contenues par tous moyens ou procédés connus, comme la précipitation sous forme d'hydroxyde, carbonate ou oxalate.

Les solutions de terres rares traitées par ce procédé sont par exemple des solutions provenant de la redissolution par un acide, avantageusement l'acide nitrique, des hydroxydes obtenus à la suite de l'attaque sodique des minerais contenant les terres rares tels que la monazite, la bastnaésite et le xénotime.

On peut également mettre en oeuvre toute autre solution de sel de terres rares provenant par exemple de l'attaque acide de scraps, d'alliage de terres rares, ou obtenue après purification et/ou extraction de certaines terres rares des solutions de redissolution, comme par exemple une solution obtenue après extraction des terres rares légères par un procédé connu et contenant de l'yttrium et des terres rares lourdes pour ainsi récupérer de l'yttrium pur, cet élément étant très recherché pour de nombreuses applications comme la luminescence, la fluorescence, les matériaux optiques.

Le procédé de l'invention est mis en oeuvre dans son mode de réalisation préféré, selon les techniques et dispositifs habituels utilisés dans les procédés d'extraction liquide/liquide.

Ainsi, le rapport en débit de la phase organique et des phases aqueuses est déterminé en fonction de la concentration de l'agent extractant et des concentrations des terres rares dans la phase aqueuse et conformément à l'appareillage utilisé pour la mise en oeuvre du procédé de l'invention. Il est déterminé selon des modes de calcul bien connu de l'homme du métier.

Egalement, les températures des différentes phases aqueuses et organiques ne sont pas critiques : elles sont choisies généralement entre 10°C et 50°C, le plus souvent le procédé est mis en oeuvre à température ambiante.

La présente invention sera mieux illustrée au vu des exemples donnés ci-dessous uniquement à titre indicatif.

Dans ces exemples, l'efficacité du procédé est exprimée notamment par les facteurs de séparation entre deux terres rares prises comme représentatives d'un groupe d'éléments par exemple un élément pour représenter les terres rares légères et un pour les terres rares lourdes.

Ce facteur de séparation est défini comme une relation entre les coefficients de partages des terres rares TR1 et TR2.

$$F_{1,2} = \frac{P_{TR_1}}{P_{TR_2}}$$

Le coefficient de partage $^{P}TR_1$, $^{P}TR_2$ est égal au rapport entre la concentration de $TR_1$ (ou $TR_2$) dans la phase organique et la concentration de $TR_1$ (ou $TR_2$) dans la phase aqueuse.

Pour que la séparation entre $TR_1$ et $TR_2$ soit possible, F doit être différent de 1.

Si $TR_1$ est la terre rare qui possède le coefficient de partage le plus élevé, dans ce cas F est supérieur à 1.

D'autres détails, avantages de l'invention apparaîtront plus clairement au vu des exemples donnés ci-dessous uniquement à titre indicatif :

<u>Exemple 1</u>

Une phase organique, appelée solvant, est mise en contact par mélange intime avec une solution aqueuse contenant des nitrates de terres rares. Ce mélange est réalisé volume à volume.

La composition du solvant est:
. acide versatic 1 mole/l
. tributyl phosphate (TBP) 0,37 mole/l
. kérosène commercialisé par la société ESSO
La composition de la solution de terres rares est :
. nitrates de lanthanides (Ln) et d'yttrium : 1,33 mole/l
. rapport massique $Y_2O_3/L_{n2}O_3+Y_2O_3$ = 2 %.
Dans le tableau ci-dessous sont répertoriés les facteurs de séparation $F_{Ln}/y$ des lanthanides par rapport à l'yttrium, pour deux concentrations de terres rares contenues dans le solvant après extraction, cette dernière caractéristique est également appelée "charge du solvant en terres rares", et exprimée en équivalent TR/l (1).

| Ln / (1) | La | Ce | Pr | Nd | Sm | En | Gd | Tb | Dy | Ho | Er | Tm | Yb | Lu |
|---|---|---|---|---|---|---|---|---|---|---|---|---|---|---|
| 0,3 | 0,21 | 0,41 | 0,65 | 0,77 | 1,5 | 1,7 | 2 | 2,1 | 2,2 | 2,2 | 2,2 | 2,9 | 3,1 | 3,0 |
| 0,87 | 0,15 | 0,25 | 0,33 | 0,4 | 0,52 | 0,58 | 0,60 | 0,95 | 1,2 | 1,8 | 2,2 | 4,1 | 6,9 | 4,8 |

(1) = Charge du solvant en eq TR/l

Exemple 2

L'exemple 1 est répété avec une solution de terres rares identique mais un solvant de composition suivante :
. acide versatic 1 mole/l
. composé organophosphoré : 0,37 mole/l
. kérosène
Le tableau suivant donne la variation du facteur de séparation $F_{Ln}/_Y$ pour un solvant chargé avec 0,7 eq/l de terres rares et différents agents organophosphorés.

| Ln / Composé organo-phosphoré | La | Ce | Pr | Nd | Sm | Eu | Gd | Tb | Dy | Ho | Er | Tm | Yb | Lu |
|---|---|---|---|---|---|---|---|---|---|---|---|---|---|---|
| TBP | 0,22 | 0,30 | 0,41 | 0,55 | 0,6 | 0,8 | 0,65 | 1 | 1,25 | 1,3 | 2,3 | 3,7 | 4,7 | 5,4 |
| DBBP | 0,15 | 0,30 | 0,32 | 0,38 | 0,4 | 0,5 | 0,44 | 0,7 | 1 | 1,2 | 1,6 | 3,3 | 3,6 | 4,6 |
| TOPO | 0,18 | 0,27 | 0,32 | 0,4 | 0,6 | 0,7 | 0,5 | 1 | 1,2 | 1,5 | 2,1 | 3,8 | 4,1 | 3,6 |

DBBP = dibutyl - butylphosphonate
TOPO = oxyde de trioctylphosphine

Exemple 3

L'exemple 1 est répété mais avec un solvant de composition suivante :
. acide versatic 1 mole/l
. alcool lourd 10 % en volume
. kérosène
Le tableau ci-dessous répertorie les facteurs de séparation $F_{Ln}/Y$ pour deux alcools lourds.

| Ln / alcool | La | Ce | Pr | Nd | Sm | Eu | Gd | Tb | Dy | Ho | Er | Tm | Yb | Lu |
|---|---|---|---|---|---|---|---|---|---|---|---|---|---|---|
| n-décanol | 0,20 | 0,41 | 0,65 | 0,8 | 1,5 | 1,7 | 2 | 2 | 2,2 | 2,3 | 2,2 | 3,2 | 4,1 | 3,3 |
| nonyl-phénol | 0,18 | 0,36 | 0,6 | 0,7 | 1,3 | 1,7 | 1,9 | 1,9 | 2 | 2,1 | 2,2 | 2,8 | 3,1 | 2,8 |

Exemple 4

La séparation des terres rares légères y compris l'yttrium, des terres rares lourdes (Tm, Yb, Lu) est réalisée dans une installation représentée à la figure unique comprenant une batterie 1 de mélangeurs-décanteurs, et un bac de préneutralisation du solvant.

Le solvant circule en boucle et est alimenté en 5 dans un bac de préneutralisation 2. Cette préneutralisation est réalisée par addition de soude ou d'ammoniaque par le conduit 3.

Le solvant préneutralisé est alimenté dans le premier étage de la batterie 1 et sort par la conduite 6 du dernier étage. Le solvant est ensuite introduit dans une installation pour la réextraction des terres rares avec une solution acide, comme par exemple une seconde batterie de mélangeurs décanteurs (non représentée), avant d'être recyclé.

La solution de terres rares à traiter est alimentée en 4 dans un étage intermédiaire de la batterie 1 et sort

en 7 du premier étage de cette batterie.

Le bilan matière de l'installation est :

– solution d'alimentation en terres rares :
  . concentration en lanthanides et yttrium 1 mole/l
  . pH : 3
  . répartition des terres rares
    $T_{m2}O_3 + Yb_2O_3 + Lu_2O_3/TR_2O_3 = 5\ \%$
  . débit : 100 l/h
– solutions de lanthanides "lourdes" ($T_{m2}O_3 + Yb_2O_3 + Lu_2O_3$) alimentée en 8 :
  . concentration en lanthanides : 1 mole/l
  . pH : 2
  . débit : 100 l/h
– solvant alimenté en 5 :

. composition : - acide versatic 1 mole/l
- TBP 0,37 mole/l
- diluant : kérosène
. débit : 370 l/h

– solution aqueuse chargée en lanthanides autres que lourdes sortant en 7 :
  . concentration en lanthanides + yttrium : 0,41 mole/l
  . répartition des terres rares "lourdes"
    $Tm_2O_3 + Yb_2O_3 + Lu_2O_3/TR_2O_3 < 1$ ppm
  . débit : 231,5 l/h
– solvant chargé en lanthanides lourdes sortant en 6 :
  . concentration en lanthanides : 0,283 mole/l
  . rapport lanthanides lourdes/$TR_2O_3 > 98\ \%$
  . débit : 370 l/h

## Revendications

**1/** Procédé de séparation d'ions de terres rares légères y compris l'yttrium de ceux de terres rares lourdes contenus dans une solution aqueuse, caractérisé en ce qu'il consiste à :

– mettre en contact ladite solution aqueuse avec un matériau comprenant un agent extractant organique pour faire passer les ions de terres rares lourdes depuis la phase aqueuse vers ledit matériau, ledit agent extractant étant un mélange d'au moins un acide carboxylique insoluble dans l'eau comprenant plus de 6 atomes de carbone ou son sel et d'au moins un composé neutre insoluble dans l'eau choisi dans le groupe des agents organophosphorés neutres ou des alcools ayant un nombre de carbone supérieur à 6,

– à réextraire les ions de terres rares lourdes par mise en contact dudit matériau comprenant l'agent extractant avec une solution aqueuse acide, et

– recueillir d'une part une solution aqueuse contenant les ions de terres rares légères y compris l'yttrium et d'autre part une solution aqueuse contenant les ions de terres rares lourdes.

**2/** Procédé selon la revendication 1 caractérisé en ce que le matériau comprenant un agent extractant est une solution organique dudit agent extractant dans un diluant organique.

**3/** Procédé selon la revendication 1, caractérisé en ce que le matériau comprenant un agent extractant est un support poreux dans lequel est incorporé ledit agent.

**4/** Procédé selon la revendication 1, 2 ou 3 caractérisé en ce que l'acide organique insoluble dans l'eau comprend de 6 à 20 atomes de carbone.

**5/** Procédé selon la revendication 1, 2, 3 ou 4 caractérisé en ce que l'acide carboxylique est un acide halogéno di ou tri alkyl carboxylique.

**6/** Procédé selon l'une des revendications précédentes caractérisé en ce que l'acide carboxylique insoluble est choisi dans le groupe comprenant l'acide méthyl-2 butyl-2 pentanoïque, l'acide bromo-2 éthyl-2 hexanoïque, l'acide méthyl-2 butyl-2 butanoïque, l'acide méthyl-2 propyl-2 butanoïque, l'acide méthyl-2 butyl-2 hexanoïque,

l'acide chloro-2 éthyl-2 hexanoïque et l'acide bromo-2 butyl-2 heptanoïque.

**7/** Procédé selon la revendication 1, 2, 3 ou 4 caractérisé en ce que l'acide organique insoluble est un acide naphténique ou benzoïque.

**8/** Procédé selon l'une des revendications précédentes caractérisé en ce que le composé neutre est un composé organophosphoré choisi parmi les composés de formules générales :

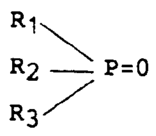 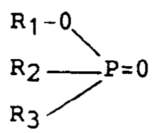 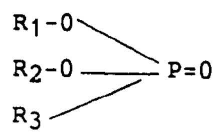 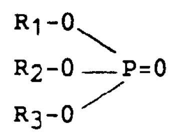

dans lesquelles :

$R_1$, $R_2$, $R_3$ identiques ou différents représentent un radical hydrocarboné substitué éventuellement, linéaire ou ramifié, saturé ou insaturé, cyclique saturé ou insaturé, ce radical pouvant également comprendre des hétéroatomes.

**9/** Procédé selon la revendication 8 caractérisé en ce qu'au moins un des radicaux $R_1$, $R_2$, $R_3$ comprend de 4 à 15 atomes de carbone.

**10/** Procédé selon la revendication 8 ou 9 caractérisé en ce que la somme des nombres d'atomes de carbone des radicaux $R_1$, $R_2$, $R_3$ est au moins égale à 12.

**11/** Procédé selon la revendication 8 caractérisé en ce que le composé organophosphoré est choisi dans le groupe comprenant le tri-n-butyl-phosphate, le tri-isobutylphosphate, le dibutylphosphate, le di éthylhexyl-2 éthylhexyl-2 phosphonate, l'oxyde de tri-octylphosphine.

**12/** Procédé selon l'une des revendications précédentes caractérisé en ce que les alcools sont choisis dans le groupe comprenant les alcools mono ou polyfonctionnels ayant de 5 à 20 atomes de carbone.

**13/** Procédé selon l'une des revendications précédentes caractérisé en ce que le diluant est choisi parmi les hydrocarbures aliphatiques, les composés aromatiques et les diluants halogénés.

**14/** Procédé selon l'une des revendications 2 et 4 à 13 caractérisé en ce que la teneur en composé neutre dans la solution organique est comprise entre 0,1 mole/l et 3 mole/l.

**15/** Procédé selon l'une des revendications 2 et 4 à 13 caractérisé en ce que la teneur en acide carboxylique dans la solution organique est comprise entre 0,1 mole/l et 3 mole/l.

**16/** Procédé selon l'une des revendications précédentes caractérisé en ce que la solution aqueuse acide de réextraction des ions de terres rares lourdes a une concentration comprise entre $10^{-2}$ N et 10N.

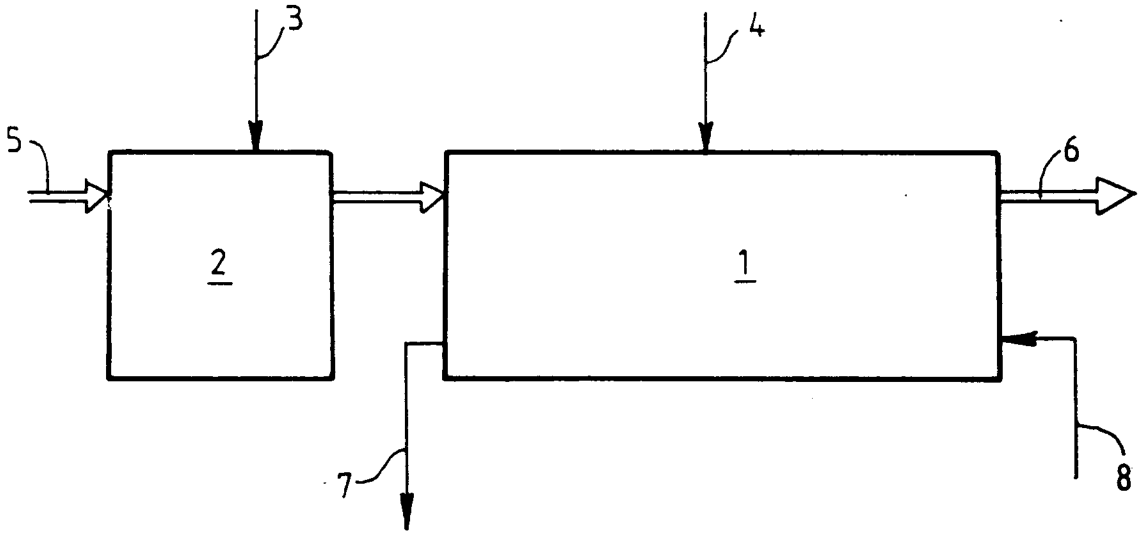
3
4
5
6
2
1
7
8

Office européen des brevets

# RAPPORT DE RECHERCHE EUROPEENNE

Numero de la demande

EP 91 40 2878

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 388 250 (RHONE-POULENC CHIMIE) * Page 6, ligne 3 - page 7, ligne 26; revendications 14-18; figure 2 * --- | 1-16 | C 01 F 17/00 |
| Y | EP-A-0 156 735 (RHONE-POULENC SPECIALITES CHIMIQUES) * Page 10, lignes 6-33 * --- | 1-16 | |
| A | EP-A-0 393 287 (RHONE-POULENC CHIMIE) * Page 3, ligne 28 - page 5, ligne 30; revendications 8-12 * --- | 1,2,8-16 | |
| A | EP-A-0 298 843 (RHONE-POULENC CHIMIE) * Colonne 2, lignes 26-59; revendications 2,3 * --- | 2,4,6,7,13 | |
| A | EP-A-0 021 990 (RHONE-POULENC INDUSTRIES) ----- | | |

DOMAINES TECHNIQUES RECHERCHES (Int. Cl.5)

C 01 F

Le présent rapport a été établi pour toutes les revendications

| Lieu de la recherche | Date d'achèvement de la recherche | Examinateur |
|---|---|---|
| LA HAYE | 30-01-1992 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)